## Europäisches Patentamt
## European Patent Office
## Office européen des brevets

(19)

(11) Numéro de publication: **0 031 262**
**B1**

(12) **FASCICULE DE BREVET EUROPEEN**

(45) Date de publication du fascicule du brevet: **02.11.83**

(51) Int. Cl.³: **F 16 C 32/06**

(21) Numéro de dépôt: **80401641.8**

(22) Date de dépôt: **17.11.80**

(54) **Palier hydrostatique de guidage d'un arbre**

(30) Priorité: **20.11.79 FR 7928524**

(43) Date de publication de la demande:
**01.07.81 Bulletin 81/26**

(45) Mention de la délivrance du brevet:
**02.11.83 Bulletin 83/44**

(84) Etats contractants désignés:
**BE DE GB IT NL**

(56) Documents cités:
**FR - A- 1 219 118**
**FR - A - 2 235 458**
**US - A - 2 738 238**
**US - A - 2 811 109**
**US - A - 3 399 001**

(73) Titulaire: **JEUMONT-SCHNEIDER Société anonyme dite:**
**31-32, Quai de Dion Bouton**
**F-92811 Puteaux Cedex (FR)**

(72) Inventeur: **Drevet, Michel**
**3, Allée des Tourterelles**
**F-59460 Jeumont (FR)**
Inventeur: **Trouillet, Jean**
**1, Place Desoil**
**B-6540 Fontaine-Valmont (BE)**

(74) Mandataire: **Lejet, Christian**
**Société JEUMONT-SCHNEIDER**
**31-32, Quai de Dion Bouton**
**F-92811 Puteaux Cedex (FR)**

Courier Press, Leamington Spa, England.

Palier hydrostatique de guidage d'une arbre

La présente invention concerne les paliers hydrostatiques de guidage d'un arbre dont le tourillon est en forme de manchon et une pompe à fluide mettant en oeuvre un tel palier.

Les paliers hydrostatiques de guidage sont bien connus de l'Homme de l'Art. Ils sont généralement définis par le nombre de chambres ménagées dans le coussinet entourant concentriquement le tourillon de l'arbre en rotation. Un fluide visqueux sous pression est admis dans les chambres pour limiter le frottement entre le tourillon et le coussinet, et il s'échappe par les orifices prévus à cet effet dans le coussinet à une certaine distance des chambres.

La longueur axiale du tourillon est suffisamment importante par rapport à la longueur de l'arbre, de telle manière que la ligne d'arbre ait un comportement dynamique satisfaisant et, en particulier, que le niveau vibratoire de l'ensemble soit inférieur à un seuil donné.

La présente invention a pour objet un palier hydrostatique de guidage ayant les mêmes buts, mais dont le tourillon a une longueur axiale réduite puisqu'il affecte la forme d'un manchon, le palier comportant un premier et un second jeux de chambres ménagées dans des coussinets concentriques en regard respectivement de la paroi interne et de la paroi externe du tourillon.

On connaît le brevet américain US. 2 811 109 qui concerne un palier de guidage d'un arbre de pompe dont le tourillon affecte la forme d'un manchon.

Selon l'invention, dans le but d'améliorer les caractéristiques de fonctionnement d'un tel palier, les chambres du premier jeu sont décalées angulairement par rapport aux chambres du second jeu.

Selon une autre caractéristique de l'invention les chambres du premier jeu sont aussi décalées axialement par rapport aux chambres du second jeu.

Un tel palier est notamment prévu pour le guidage de l'arbre d'une pompe à fluide, par exemple une pompe primaire de réacteur nucléaire. Dans ce cas, le fluide de glissement du palier peut avantageusement être prélevé dans le fluide pompé, en aval de la pompe, les conduits d'admission pouvant alors diriger le fluide de glissement dans un direction centripète.

Selon le brevet américain précité, le fluide d'alimentation circule en circuit fermé au moyen d'une roue auxiliaire solidaire de l'arbre, de telle manière que le fluide d'alimentation soit à une température inférieure à celle du fluide pompé par la roue principale et à la même pression pour éviter tout échange de fludes entre les circuits.

L'invention sera mieux comprise et d'autres buts, avantages et caractéristiques de celle-ci apparaîtront plus clairement à la lecture de la description qui suit d'un exemple de réalisation de l'invention, description à laquelle deux planches de dessins sont annexées.

La figure 1 représente, en coupe axiale, un palier hydrostatique conforme à la présente invention.

La figure 2 représente, en demi-coupe axiale, une variante du mode de réalisation représenté figure 1 d'un palier hydrostatique conforme à la présente invention, et

La figure 3 représente, en demi-coupe transversale selon la ligne III—III des figures 1 et 2, un agencement angulaire préféré des différentes chambres du palier.

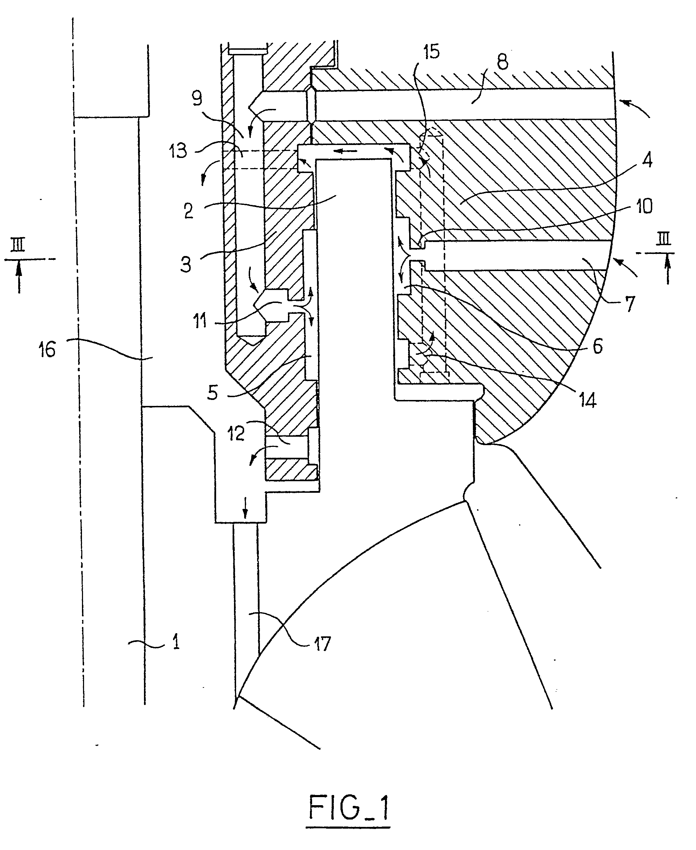

En référence maintenant à la figure 1, sur laquelle seule une demi-coupe d'un palier hydrostatique a été représentée, du fait de la symétrie axiale de l'ensemble l'arbre 1 est solidaire du manchon 2 formant tourillon pour le palier. Ce dernier comporte deux coussinets concentriques 3 et 4 dans lesquels sont ménagés deux jeux de chambres 5 et 6. Ces chambres sont respectivement en regard de la paroi interne et de la paroi externe du manchon 2.

L'admission du fluide visqueux est obtenue à l'aide des conduits 7, 8 et 9, des gicleurs 10, 11 étant prévus entre chaque conduit d'admission et la chambre correspondante. Le fluide visqueux circule du fait de la pression à partir des chambres vers les conduits d'échappement, entre la paroi du tourillon et celle du coussinet. Des conduits d'échappement 12, 13, 14 et 15 sont prévus de part et d'autre de la chambre correspondante 5, 6, de manière à amener le fluide utilisé vers un collecteur 16.

Dans l'exemple représenté qui est celui d'une pompe à fluide, le fluide visqueux circule de manière centripète, le collecteur 16 étant ménagé entre l'arbre 1 et le manchon faisant office de tourillon 2. Toutefois, cette disposition peut être inversée.

Dans l'exemple d'une pompe à fluide, le fluide visqueux utilisé est constitué favourablement par le fluide pompé, les conduits d'admission 7, 8 ayant leur extrémité ouvertre en aval de la pompe, c'est-à-dire dans la partie où le fluide est sous pression.

En circulant dans le palier, le fluide se détend et le collecteur 16, relié à un conduit 17, libère le fluide en amont de la pompe, c'est-à-dire dans la zone où le fluide n'a pas encore été pompé et oùil est donc sous une pression plus basse qu'en aval.

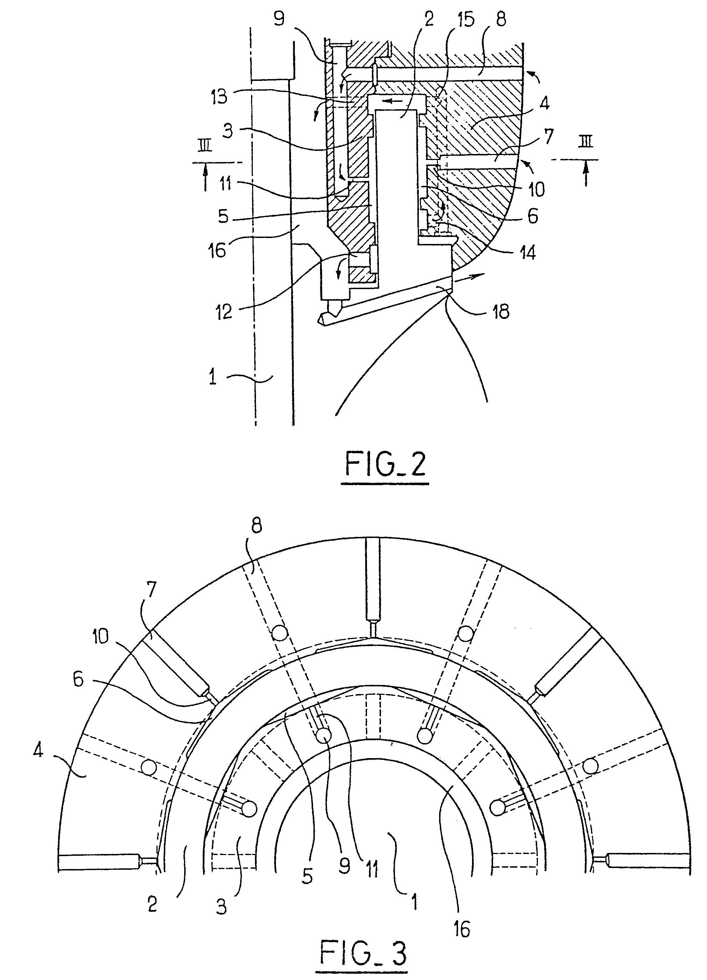

De ce fait, pour réduire la perte de rendement de la pompe, il peut être préféré la disposition représentée figure 2, dans laquelle le collecteur 16 est relié au conduit 18 dont l'orientation centrifuge permet de ramener le fluide utilisé dans le palier vers l'aval, c'est-à-dire dans la zone où le fluide est sous pression.

Le palier hydrostatique de guidage selon l'invention permet de réduire sensiblement la longueur axiale du tourillon tout en maintenant les caractéristiques du palier. En outre, un tel palier permet d'améliorer le comportement dynamique de la ligne d'arbre et, par suite, d'augmenter la valeur de sa vitesse critique de flexion tout en réduisant le niveau vibratoire de l'ensemble.

Dans l'application aux pompes primaires pour réacteur nucléaire, le fluide visquex est à haute température. De ce fait, un incident d'alimentation ou la rupture de la barrière thermique n'affecte pas le bon fonctionnement d'un tel palier.

Toutefois, pour améliorer les performances de ce palier, on optimise l'uniformisation de sa portance, comme représenté figure 3 avec les mêmes références, par un décalage angulaire des chambres d'un coussinet par rapport aux chambres de l'autre coussinet, et/ou, comme représenté figures 1 et 2, par un décalage axial des chambres d'un coussinet par rapport aux chambres de l'autre coussinet. Ce double décalage a pour résultat de réduire sensiblement l'effet de pulsation dans le palier.

L'application d'un tel palier n'est pas limitée aux pompes à fluide mais au contraire, s'étend à toutes les machines tournantes à arbre horizontal, vertical ou incliné.

## Revendications

1. Palier hydrostatique de guidage d'un arbre dont le tourillon affecte la forme d'un manchon comportant un premier et un second jeux de chambres (5 et 6) ménagées dans des coussinets concentriques (3 et 4) respectivement en regard de la paroi interne et de la paroi externe du dit tourillon, caractérisé en ce que les chambres (5) dudit premier jeu sont décalées angulairement par rapport aux chambres (6) dudit second jeu.

2. Palier selon la revendication 1, caractérisé en ce que les chambres (5) dudit premier jeu sont décalées axialement par rapport aux chambres (6) dudit second jeu.

3. Pompe à fluide comportant un palier selon les revendications 1 ou 2, caractérisée en ce que ledit fluide, prélevé en aval de ladite pompe, est utilisé comme fluide de glissement dans ledit palier.

4. Pompe selon la revendication 3, caractérisé en ce que les conduits d'admission (7, 8) dudit fluide de glissement dirigent ledit fluide dans une direction centripète.

5. Pompe selon la revendication 4, caractérisée en ce que le collecteur d'échappement (16) dudit fluide est constitué par l'espace laissé libre entre ledit tourillon en forme de manchon et ledit arbre (1).

6. Pompe selon la revendication 5, caractérisée en ce qu'un conduit d'échappement (17) relie ledit collecteur (16) à la partie amont de ladite pompe.

7. Pompe selon la revendication 5, caractérisée en ce qu'un conduit d'échappement (18) centrifuge relie ledit collecteur (16) à la partie aval de ladite pompe.

## Patentansprüche

1. Hydrostatisches Lager für die Führung einer Welle, deren Lagerzapfen die Form eines Stutzens aufweist, mit einem ersten und einem zweiten Satz von Kammern (5 und 6), die in konzentrischen Lagerbuchsen (3 und 4) gegenüber der Innenwandung bzw. gegenüber der Außenwandung des Lagerzapfens angebracht sind, dadurch gekennzeichnet, daß die Kammern (5) des ersten Satzes gegenüber den Kammern (6) des zweiten Satzes winkelversetzt angeordnet sind.

2. Lager nach Anspruch 1, dadurch gekennzeichnet, daß die Kammern (5) des ersten Satzes in Axialrichtung in bezug auf die Kammern (6) des zweiten Satzes verschoben sind.

3. Pumpe für ein fluides Medium mit einem Lager nach den Ansprüche 1 oder 2, dadurch gekennzeichnet, daß das in Strömungsrichtung hinter der Pumpe abgegriffene fluide Medium zur Schmierung des Lagers verwendet wird.

4. Pumpe nach Anspruch 3, dadurch gekennzeichnet, daß die Zuleitungen (7, 8) des fluiden Gleitmittels dieses fluide Medium in einer Zentripetalrichtung führen.

5. Pumpe nach Anspruch 4, dadurch gekennzeichnet, daß der auslaßseitige Sammler (16) für das fluide Medium durch den Raum gebildet ist, der zwischen dem stutzenförmigen Lagerzapfen und der Welle (1) frei gelassen ist.

6. Pumpe nach Anspruch 5, dadurch gekennzeichnet, daß eine Ausstoßleitung (17) den Sammler (16) mit dem stromaufwärts liegenden Teil der Pumpe verbindet.

7. Pumpe nach Anspruch 4, dadurch gekennzeichnet, daß eine Zentrifugal-Ausstoßleitung (18) den gennanten Sammler (16) mit dem stromabwärts leigenden Teil der Pumpe verbindet.

## Claims

1. Hydrostatic guide bearing for a shaft whose journal is in the form of a sleeve, comprising a first and a second set of chambers (5 and 6) arranged in concentric bearing shells (3 and 4) respectively opposite the internal wall and the external wall of the said journal, characterised in that the chambers (5) of the said first set are offset angularly with respect to the chambers (6) of the said second set.

2. Bearing according to claim 1, characterised in that the chambers (5) of the said first set are offset axially relatively to the chambers (6) of the said second set.

3. Fluid pump comprising a bearing according to claims 1 or 2, characterised in that the said fluid, taken from the down-stream side of

**0 031 262**

the said pump, is used as lubricating fluid in the said bearing.

4. Pump according to claim 3, characterised in that the inlet conduits (7, 8) for the said lubrication fluid direct the said fluid in a centripetal direction.

5. Pump according to claim 4, characterised in that the discharge collecting duct (16) for the said fluid is constituted by the space left free between the said sleeve-shaped journal and the said shaft (1).

6. Pump according to claim 5, characterised in that a discharge conduit (17) connects the said collecting duct (16) to the upstream portion of the said pump.

7. Pump according to claim 5, characterised in that a centrifugal discharge conduit (18) connects the said collecting duct (16) to the downstream portion of the said pump.

FIG_1

FIG_2

FIG_3